# EUROPEAN PATENT SPECIFICATION

(11) **EP 4 580 998 B1**
(45) Date of publication and mention of the grant of the patent: **08.07.2026**
(21) Application number: 23762528.0
(22) Date of filing: 01.09.2023
(51) Int. Cl.: C03B 5/02, C03B 5/12, C03C 1/00, C03C 3/087

(54) **PROCESS FOR RECYCLING WASTE MINERAL MATERIAL**
VERFAHREN ZUR WIEDERVERWERTUNG VON ABFALLMINERALIEN
PROCÉDÉ DE RECYCLAGE DE DÉCHETS DE MATIÈRES MINÉRALES

(30) Priority: 02.09.2022 EP 22193727
(43) Date of publication of application: 09.07.2025
(73) Proprietor: ROCKWOOL A/S, 2640 Hedehusene (DK)
(72) Inventor: HANSEN, Lars Elmekilde, 2640 Hedehusene (DK); WILLIAMS, Anders, 2640 Hedenhusene (DK)
(74) Representative: Gill Jennings & Every LLP
(86) International application number: PCT/EP2023/074057
(87) International publication number: WO 2024/047238

(56) References cited:
- WO-A1-2012/157432
- US-A- 5 069 429

## Description

### FIELD OF THE INVENTION

The present invention relates to a process for preparing a mineral melt in a cupola furnace that comprises a plasma torch that heats mineral material and waste or recycled mineral material to form the melt, wherein the waste or recycled mineral material is introduced into the furnace through a waste inlet located in the side wall of the furnace hot zone.

### BACKGROUND

Methods of preparing a mineral melt for the production of man-made mineral fibres (MMVF), such as glass fibre or stone fibre, are known to be carried out in shaft furnaces, such as cupola furnaces. They involve heating mineral material to form the mineral melt. The heating may be provided by any means, but it is traditionally carried out in the presence of coke and an oxygen-containing gas, or by passing an electrical current between two or more electrodes, e.g. graphite or molybdenum electrodes. The mineral material may also be melted using a plasma torch. The use of plasma as a source of heat is advantageous as it may minimise the production of harmful gases, such as CO₂, NOₓ and H₂, which would otherwise be present in the furnace off-gas.

Spinning processes used to form MMVF inevitably produce various by-products that form waste mineral material. This waste mineral material may be in the form of fine powder-like materials, such as that formed when MMVF is cut, or it may be fibrous in nature. In addition, MMVF products that have served their useful lifetime, such as MMVF insulation removed during building renovation, is also considered waste mineral material. Waste mineral material may comprise binder that was used during the MMVF manufacturing process. The waste may also be in a cured or non-cured state.

As an alternative to its disposal in landfill sites, waste mineral material may be recycled by combining it with other (conventional) mineral material and heating it to form a mineral melt. That mineral melt may then be spun into new MMVF products.

Despite the benefits of recycling waste mineral material, it cannot simply be combined with conventional mineral material and added to the furnace in the usual way. Direct introduction of waste mineral material into a shaft furnace, such as placing it on the top of the mineral stack, is unacceptable. Due to the various geometries of waste mineral material, e.g. fine powders and fibrous material, and its insulating properties it may choke or suffocate the furnace by preventing off-gas from traveling up through the mineral stack, by restricting the flow of oxygen through tuyeres and oxygen injection ports of the furnace, or restricting the flow of plasma from a plasma torch into the furnace. This greatly decreases the efficiency of a furnace and may also cause the melting process to fail.

Waste mineral material may be processed to form briquettes that may be added to a shaft furnace together with conventional mineral material. However, the briquetting process requires the addition of binder to the waste mineral melt, which exacerbates the environmental problems. The use of these briquettes is also unattractive as it increases the complexity and cost of the recycling process and is therefore unattractive on an industrial scale.

WO 90/07470 describes a method for preparing a melt for mineral wool production using waste wool, in which heat is provided by a plasma torch. The waste wool is fed into a connecting pipe using an auger conveyer, wherein the connecting pipe carries the jet of plasma to the cupola furnace. In this method the waste wool is added to the plasma outside of the cupola furnace. One problem with this method is that the feed tube housing the auger conveyer as well as the connecting pipe are prone to becoming clogged with slag (waste wool components), which is exacerbated when the feed tube and connecting pipe are water cooled to prolong the lifetime of the device. A preferred embodiment attempts to reduce the impact from clogging of the feed tube by gradually increasing the diameter of the feed tube viewed in the direction towards the connecting pipe, however, the connecting pipe is still prone to clogging.

WO2012157432 A1 discloses a glass melting method using a shaft furnace, whereby raw material is supplied into the top of the furnace through an burner, whereafter the raw material passes a hot zone in the lower part of the furnace heated by a plasma. US5069429 A teaches a furnace for melting metal compounds that could in the widest sense maybe be seen as suitable for melting glass. The furnace has a hot zone at the bottom that is heated by a plasma torch. Raw material is supplied from the top of the furnace.

There is therefore a need for an improved method of forming a melt suitable for use in the formation of mineral fibre, which method uses a significant proportion of waste mineral material.

### SUMMARY OF INVENTION

In a first aspect of the invention there is provided a process for preparing a mineral melt in a cupola furnace, wherein the mineral melt is for the formation of mineral wool, the cupola furnace comprises
(i) a hot zone at the base of the furnace;
(ii) a melt outlet in the hot zone;
(iii) at least one plasma torch that provides plasma heating to the hot zone, by way of a plasma jet that defines a cavity that is substantially void of solid material within the hot zone; and
(iv) a waste inlet located in the side wall of the furnace hot zone, and is configured to deliver waste mineral material to the cavity defined by the plasma jet,
wherein mineral material and the waste mineral material supplied to the furnace is melted to form the mineral melt.

In a second aspect of the invention there is provided a process for manufacturing man-made vitreous fibres (MMVF) comprising the steps of
(i) forming a mineral melt using a process as defined in the first aspect of the invention, or any embodiment thereof;
(ii) fiberizing the mineral melt by means of an internal or external spinning process, preferably using a cascade spinner; and
(iii) collecting the formed fibres.

In a third aspect of the invention there is provided a cupola furnace for the preparation of a mineral melt according to a process as defined in the first aspect of the invention, or any embodiment thereof.

### BRIEF DESCRIPTION OF DRAWINGS

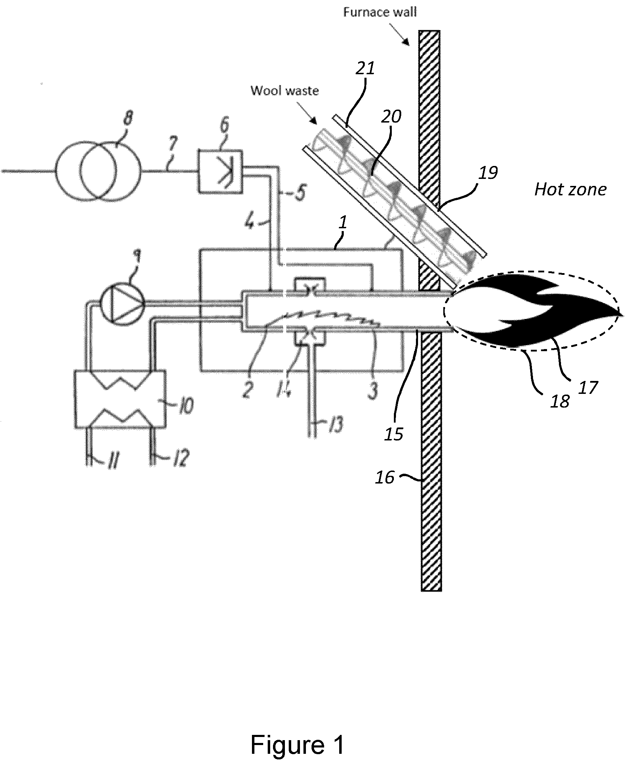

Figure 1 is a schematic representation of a section of a cupola furnace configuration that may be used to implement the invention.

### DETAILED DESCRIPTION

The invention is predicated upon the unexpected finding that a waste inlet located in the wall of the hot zone of a cupola furnace may efficiently and effectively deliver waste mineral material into a plasma jet wherein it is melted to form a mineral melt, without the above-mentioned disadvantages.

Cupola furnaces that are heated using plasma typically comprise a hot zone at the lower portion of the furnace, also referred to as the base of the furnace. One or more plasma torches may provide heating to the hot zone at a level sufficient to melt mineral material (a mineral charge). The mineral melt thus forms a pool at the base of the hot zone, in the spaces between the structure supporting the stack of mineral material (usually the mineral material itself or coke is used in the process). Once a certain volume of mineral melt is produced, it may be removed from the furnace through some form of melt outlet, such as a siphon. Once removed from the furnace, the mineral melt may be used to form man-made vitreous fibre (MMVF) by any suitable spinning method.

Plasma torches generate thermal plasma using direct current (DC), alternating current (AC), radiofrequency (RF) and other discharges. Thermal plasmas provide heat, which in DC plasma torches is produced by sending an electric arc between two electrodes, through which arc a carrier gas is passed within a constricted opening. This elevates the temperature of the gas to the point that it enters a fourth state of matter, i.e. plasma. Plasma torches may be transferred or non-transferred. In non-transferred DC plasma torches, the electrodes are inside the housing of the torch. Whereas in a transferred plasma torch one electrode is located outside the housing of the torch, allowing the arc to form outside of the plasma torch and over a greater distance. It is preferable that the plasma torch in the present invention is a non-transferred plasma torch. Most preferably it is a direct current non-transferred plasma torch.

Plasma torches may use a variety of carrier gases, such as oxygen, nitrogen, argon, helium, air, hydrogen, water steam, or mixtures thereof.

The one or more plasma torches are typically mounted on an external side of the furnace such that the thermal plasma generated, commonly referred to as a plasma jet, penetrates the hot zone of the furnace. The plasma jet may reach temperatures up to 7000°C, which is sufficient to melt the mineral material in its vicinity. As the solid mineral material is melted (and subsequently removed from the furnace via the melt outlet), the stack of mineral material moves down through the furnace to replace it. It has been found that, in practice, the plasma jet defines a cavity (a three-dimensional shape) within the furnace that is substantially void of solid material, e.g. mineral material, waste mineral material, and coke. The temperature and environment within the plasma jet is such that the mineral material in the furnace will typically melt prior to entering the defined cavity, however, that cavity may comprise some solid material. For instance, a section of the stack of mineral material may become detached from the bulk material and fall into the plasma jet. Alternatively, due to the melting process the stack my suddenly and partially collapse leading to solid mineral material entering the plasma jet. That solid material also includes waste mineral material from the waste inlet as discussed below. In any case, any solid material within the cavity would be transient as it would be quickly melted by the plasma jet.

It is preferable that the plasma jet defines a cavity that is void of solid material within the hot zone. That is, no mineral material or waste mineral material enters that cavity.

The term "waste mineral material" is as mentioned above and includes various by-products of the MMVF-forming process, which are generally called mineral wool waste. These by-products include a fine powder-like material that is formed in connection with the cutting, e.g. edge cutting, of mineral wool mats so as to form mineral wool slabs having desired dimensions. It also includes recycled mineral material, such as MMVF insulation removed from buildings during renovation, which may otherwise end up in landfill. Waste mineral material may comprise additives, such as binders and hydrophilic or hydrophobic compounds, that were added during the manufacturing process.

The cupola furnace comprises a waste inlet located in the side wall of the furnace hot zone. The waste inlet is essentially an opening in the furnace wall. It is configured to deliver waste mineral material to the cavity defined by the plasma jet. In essence, the waste inlet is able to supply waste mineral wool directly into the plasma jet. It will be appreciated that, due to the environment surrounding the plasma jet, the waste mineral material may melt prior to it entering the plasma jet. This may be dependent upon the amount or rate at which the waste mineral material is introduced into the furnace via the waste inlet. Once melted, it will form part of the mineral melt at the base of the hot zone and may be removed via the melt outlet.

The waste mineral material may be fed through the waste inlet and into the furnace by any suitable means. Such means may be
(a) an auger conveyor; or
(b) a pneumatic tube transport, preferably wherein the pneumatic tube transport uses recycled off-gas from the cupola furnace or nitrogen gas (N₂) or any other non-oxygen containing gas.

It is preferable that the waste mineral material is fed through the waste inlet by an auger conveyor.

The rate of addition of waste mineral material to the cupola furnace may depend upon the size of the furnace and its melt production rate, the number of plasma torches, the number of waste inlets and their size and position in the furnace. Ideally, the amount of waste mineral material used in the process for preparing a mineral melt is from 1 to 40%, preferably 5 to 35%, more preferably 10 to 20%, of the total weight of (the combination of) waste mineral material and mineral material added to the furnace. Formation of a mineral melt in a cupola furnace is usually a continuous process and therefore the ratio of waste mineral material to the combination of waste mineral material and mineral material may be measure over a certain time period. This is because the waste mineral material and/or mineral material may be added portion-wise to the cupola furnace.

To ensure a suitable rate of addition of waste mineral material to the cupola furnace it is preferable that each waste inlet located in the wall of the furnace has an area of from 3 cm² to 320 cm², preferably from 20 cm² to 180 cm², more preferably from 50 cm² to 115 cm². This is roughly equivalent to a circular opening with a diameter of from 2 cm to 20 cm, preferably from 5 cm to 15 cm, more preferably from 5 cm to 12 cm.

Ideally, the waste inlet is located in the side wall of the furnace hot zone above the point at which the plasma jet enters the furnace. The advantage of this is that the waste mineral material may easily move towards the cavity defined by the plasma jet due to gravity. As such, this is a highly preferred feature of the invention.

The distance between the edge of the orifice through which the plasma jet enters the furnace to the edge of the waste inlet should be sufficient to ensure that the waste mineral material may be melted and incorporated into the mineral melt. This distance may be from 1 cm to 30 cm, preferably from 5 cm to 20 cm, more preferably from 7 cm to 12 cm. Often this distance is defined by the dimensions of water-cooling jackets of both the waste inlet and the plasma jet.

Due to the proximity of the waste inlet to the plasma jet, it is preferably that the waste inlet and the means by which the waste mineral material may be fed through the waste inlet (e.g. an auger conveyor or pneumatic tube transport) are formed from heat resistant material and/or provided with a cooling mechanism. The hot zone of a cupola furnace typically comprises a layer of refractory bricks. The waste inlet may therefore be an opening in those refractory bricks which provides suitable heat resistance. In addition, plasma torches are typically water cooled. The plasma torch water-cooling system may be extended to also cool the means by which the waste mineral material may be fed through the waste inlet. This may extend the working life of the furnace and minimise downtime due to maintenance, both of which increases the efficiency of the process.

Due to the diameter of common cupola furnaces it may be preferable for it to comprise two to five plasma torches, preferably three or four plasma torches, especially if the plasma torch is the primary or only means of providing heat to the furnace. The plasma torches should be located substantially in the horizontal plane around the perimeter of the furnace, and substantially equidistant from each other. This means that the plasma jet from each plasma torch extends towards the centre of the cupola furnace. To maximise the rate at which waste mineral material may be added to the furnace, each plasma torch should have an associated waste inlet.

Whilst the waste mineral material may take a variety of forms, a more uniform waste may be preferrable. Therefore, it may first be milled prior to it being introduced into the cupola furnace through the waste inlet. It is preferrable that a rod mill is used. In this case, it is preferable that the waste mineral material is milled to a density of from 500 kgm³ to 1500 kgm³, such as from 700 kgm³ to 1250 kgm³, for instance from 800 kgm³ to 1000 kgm³. Milling it to those densities means that it may more easily be added to the cupola furnace using an auger conveyor or a pneumatic tube transport.

The claimed process is particularly suitable in combination with the process as set out in WO 2022/106592. That process is for the production of a mineral melt suitable for use in the formation of MMV fibres, such as glass fibre or stone fibre, which process minimises the amount of NOₓ and H₂ produced in the off-gas of a cupola furnace even when a plasma torch is used. Such advantages may be achieved by providing greater than 50% of the heating energy to the cupola furnace using a plasma torch, wherein the plasma torch uses nitrogen (N₂), carbon monoxide (CO), carbon dioxide (CO₂), or a mixture thereof as the carrier gas, and water is excluded from any zone of the cupola furnace that is above 750 °C.

As is known, cupola furnaces typically comprise a range of temperature zones, including a hot zone, an oxidation zone, a reduction zone, and a preheating zone.

In view of the above, in a specific feature of the present process
(i) the furnace is equipped with at least one tuyere and/or oxygen injection port providing a source of oxygen in the oxidation zone of the cupola furnace;
(ii) the at least one plasma torch uses as carrier gas N₂, CO, CO₂, or a mixture thereof, optionally wherein carrier gas enthalpy is from 2.0 to 6.0 kWh/Nm³, such as from 3.0 to 5.0 kWh/Nm³, and preferably wherein the carrier gas is nitrogen (N₂);
(iii) greater than 50% of the furnace heating energy is provided by the plasma torch;
(iv) the temperature in the oxidation zone is below 1,400 °C;
(v) the temperature in the hot zone is greater than the temperature in the oxidation zone; and/or
(vi) water is substantially excluded from any zone of the furnace where the temperature is above 750 °C.

It is preferred that all of features (i) to (vi) are included to minimise the amount of NOₓ and H₂ produced in the off-gas. When this is an aim of the process,
(I) greater than 60%, preferably greater than 70%, more preferably greater than 80%, event more preferably greater than 90%, most preferably all, of the cupola furnace heating energy is provided by the at least one plasma torch; and/or
(II) wherein heating is provided in the hot zone solely by the at least one plasma torch.

In addition, NOₓ may be significantly reduced when oxygen is excluded from zones of a cupola furnace that comprise nitrogen and are at a temperature of 1,400 °C or above. To help minimise the production of NOₓ, the carrier gas, at most, should comprise only a trace amount of oxygen. This means that the carrier gas should comprise less than 5 weight% of oxygen, such as less than 2 weight%, preferably less than 0.8 weight%, based upon the total weight of the carrier gas. Ideally, the carrier gas is devoid of oxygen. This means that there are, at most, only trace amounts of oxygen present.

NOₓ may be derived from nitrogen and oxygen under high temperature. To reduce the formation of NOₓ, the temperature in the oxidation zone of the cupola furnace should be from 600 °C to 1,400 °C. To further reduce NOₓ formation, it is preferable that the temperature of the oxidation zone is from 600 °C to 1,300 °C, more preferably from 600 °C to 1,200 °C, even more preferably from 600 °C to 1,100 °C, especially from 600 °C to 1,000 °C, most preferably from 600 °C to 900 °C, particularly from 600 °C to below 850 °C.

The off-gas from cupola furnaces that are heated using plasma torches may comprise N₂, CO, CO₂, NOₓ and H₂, each of which is a component of the off-gas. The off-gas may comprise additional components, such as water and particles, i.e. solid particles of matter. In a particular feature, the off-gas as a whole, or in part, may be used in the carrier gas for one or more of the plasma torches. The components of the off-gas may be separated prior to their use as carrier gas. The components of the off-gas may be separated from each other, or the combination of two of more components may be separated from the other components. This means that the carrier gas may comprise at least one component of the off-gas, such as one, two, three, four, five, or more components of the off-gas. It is preferable that the carrier gas comprises the off-gas components N₂, CO, CO₂ or a combination thereof. Alternatively, the carrier gas may comprise one off-gas component, such as N₂, CO, or CO₂.

The one or more component of the off-gas may undergo off-gas cleaning prior to its use in the carrier gas. It is preferable that the off-gas cleaning is to remove particles suspended in the off-gas and/or water. The off-gas cleaning may be carried out on the off-gas as a whole, or at least one component thereof once separated from the remainder of the off-gas. The carrier gas may consist of the off-gas, or at least one component of the off-gas. Alternatively, it may comprise the off-gas, or at least one component of the off-gas. In the latter case, additional gas that did not form part of the off-gas may be added to the carrier gas prior to its use. In this case, the carrier gas is "topped up" with additional gas.

The process may be used to form any mineral melt that is suitable for the formation of mineral wool. In particular, the process is particularly advantageous in the formation of a mineral melt, wherein the mineral melt or subsequently produced MMVF, has a chemical analysis (measured as % by weight of oxides) of elements within the various ranges defined by the following normal and preferred lower and upper limits.

| | |
|---|---|
| SiO₂ | 35 - 50, preferably 38-48, more preferably 33-44 |
| Al₂O₃ | 12-30, preferably 15-28, more preferably 16-24 |
| TiO₂ | up to 2 |
| Fe₂O₃ | 2-12 |
| CaO | 5-30, preferably 8-20 |
| MgO | 0-15, preferably 1-12 |
| Na₂O | 0-15 |
| K₂O | 0-15 |
| P₂O₅ | 0-3 |
| MnO | 0-3 |
| B₂O₃ | 0-3. |

It is preferable in this case that, when the melt is to be formed into MMVF, the proportion of Fe(2+) in the mineral melt is greater than 80% based on total Fe, preferably at least 90%, more preferably at least 95% and most preferably at least 97% based on total Fe. In such cases, it is preferable that MMVF is made using a cascade spinner. Further details of these example mineral melts may be found in WO 2012/140173.

As is conventional in the art, reference herein to Fe₂O₃ in a mineral melt or fibre composition refers to the total amount of iron (calculated in terms of Fe₂O₃) in said melt or composition irrespective of the amount of each oxidation state of the iron present in the composition.

In the above example of the mineral melt, and the resulting fibres, it is preferred that the amount of iron in the mineral melt is from 2 to 15 % by weight, preferably 5 to 12% by weight. Cupola furnaces tend to have a reducing atmosphere, which can result in reduction of iron oxides and formation of metallic iron. Preferably, metallic iron is not incorporated into the mineral melt and fibres and should be removed from the furnace. Thus, the conditions in the furnace may be carefully controlled to avoid excess reduction of iron. However, we find that it is possible to produce final product fibres having significant levels of iron oxide.

The process of the invention may be used in the formation of fibres that can be shown to be soluble in physiological saline. Suitable high aluminium, biologically soluble fibres that can advantageously be made using the process of the present invention are described in WO96/14454 and WO96/14274, and others are described in WO97/29057, DE-U-2970027 and WO97/30002.

Such fibres preferably have an adequate solubility in lung fluids as shown in vivo tests or in vitro tests, typically conducted in physiological saline buffered to about pH 4.5. Suitable solubilities are described in WO96/14454. Usually the rate of dissolution is at least 10 or 20 nm per day in that saline. The fibres preferably have sintering temperature above 800 °C, more preferably above 1,000 °C. The melt preferably has a viscosity at fibre forming temperature of 5 to 100 poise, preferably 10 to 70 poise at 1,400°C. Additional embodiments of this example may be found in WO 99/28252.

The MMVF may be formed as a bonded web comprising the MMVF as described above, or MMVF made according to the process described above, and a cured binder composition.

Preferably, the mineral melt in this particular example has a viscosity in the range 10 to 30 poises at 1400 °C, more preferably in the range 20 to 25 poises. An advantage of choosing these viscosities is that the resulting MMVF have a smaller diameter than if the viscosity of the melt were higher. Further, it is possible to use the melt at a lower temperature in order to achieve the required operating viscosities. This saves energy, as it is possible to use the melt at a lower temperature. It also reduces the wear on rotors used to produce fibres, as a lower temperature melt causes less wear. Further details of this example mineral melt may be found in WO 2015/055758.

The viscosity of the melt may be determined in accordance with ASTM C 965-96. The raw materials (mineral material) may be in the form of briquettes. Briquettes are made in a known manner by moulding a mix of the desired particulate materials and a binder into the desired briquette shape and curing the binder. The binder may be a hydraulic binder, i.e. one that is activated by water, for instance Portland cement. Other hydraulic binders can be used as partial or complete replacement for the cement and examples include lime, blast furnace slag powder, and certain other slags, and even cement kiln dust and ground MMVF shot (JP-A-51075711, US 4,662,941 and US 4,724,295.

Alternative binders include clay. The briquettes may also be formed with an organic binder such as molasses, for instance as described in WO 95/34514. Such briquettes may be described as formstones.

The mineral melt prepared via the process of the invention may be suitable for the production of mineral wool, or MMVF, such as glass fibres or stone fibres. It is preferable that the mineral melt formed is suitable for use to form MMVF. Therefore, in the second aspect of the invention there is provided a process for manufacturing MMVF comprising the steps of
(i) forming a melt using a process as defined herein;
(ii) fiberising the melt by means of an internal or external spinning process; preferably using a cascade spinner; and
(iii) collecting the formed fibres.

The fibres, particularly MMVF, may be made from the mineral melt in a conventional manner. Generally, they are made by a centrifugal fibre-forming process. For instance, the fibres may be formed by a spinning cup process in which they are thrown outwardly through perforations in a spinning cup, or mineral melt may be thrown off a rotating disc and fibre formation may be promoted by blasting jets of gas through the mineral melt. Fibre formation may be conducted by pouring the mineral melt onto the first rotor in a cascade spinner. In this case, it is preferable that the mineral melt is poured onto the first of a set of two, three, four or even more rotors, each of which rotates about a substantially horizontal axis whereby mineral melt on the first rotor is primarily thrown onto the second (lower) rotor although some may be thrown off the first rotor as fibres, and mineral melt on the second rotor is thrown off as fibres although some may be thrown towards the third (lower) rotor, and so forth. In general, it is preferable that the spinning process uses a cascade spinner.

The properties required of a mineral melt to be used in each spinning method are known to those in the art, and the composition of the mineral melt may be tuned to provide those properties. For instance, those skilled in the art are able to select mineral materials to be added to the cupola furnace to produce a specific mineral melt composition, to be spun by a particular spinning process.

During the fiberizing process, the melt is formed into a cloud of fibres entrained in air and the fibres are collected as a web on a conveyor and carried away from the fiberizing apparatus. The web of fibres is then consolidated, which can involve cross-lapping and/or longitudinal compression and/or vertical compression and/or winding around a mandrel to produce a cylindrical product for pipe insulation. Other consolidation processes may also be performed.

A binder composition is conventionally applied to the fibres, preferably when they are a cloud entrained in air. Alternatively it can be applied after collection on the conveyor, but this is less preferred. Conventional types of binder for use with mineral wool fibres may be used.

After consolidation, the web of fibres is passed into a curing device to cure the binder. The curing may be carried out at temperatures from 100 to 300 °C, such as 170 to 270 °C, such as 180 to 250 °C, such as 190 to 230 °C.

It is preferred that the curing takes place in a conventional curing oven for mineral wool production wherein hot air is blown through the consolidated web, preferably operating at a temperature of from 150 to 300 °C, such as 170 to 270 °C, such as 180 to 250 °C, such as 190 to 230 °C. The curing may take place for a time of 30 seconds to 20 minutes, such as 1 to 15 minutes, such as 2 to 10 minutes. Typically the curing takes place at a temperature of 150 to 250 °C for a time of 30 seconds to 20 minutes.

The curing process may commence immediately after application of the binder to the fibres. The curing is defined as a process whereby the binder composition undergoes a physical and/or chemical reaction which in case of a chemical reaction usually increases the molecular weight of the compounds in the binder composition and thereby increases the viscosity of the binder composition, usually until the binder composition reaches a solid state. The cured binder composition binds the fibres to form a structurally coherent matrix of fibres.

The curing of the binder in contact with the mineral fibres may alternatively take place in a heat press. The curing of a binder in contact with the mineral fibres in a heat press has the particular advantage that it enables the production of high-density products.

The invention will be described in further detail with reference to the drawing (Figure 1) which is a schematic representation of a section of a cupola furnace configuration that may be used to implement the invention.

The plasma torch 1 comprises two separate tubular electrodes 2 and 3 to which direct current is fed through conductors 4 and 5 from a voltage regulating unit, such as a rectifier and a thyristor 6 or a rectifier and an IGBT (Insulated Gate Bipolar Transistor). Current is fed to the thyristor 6 through a conductor 7 which comprises a transformer 8. The tubular electrodes 2 and 3 are provided with cooling jackets and cooling water is introduced into the cooling jackets by means of a pump 9 and is recycled through a heat exchanger 10. A cooling medium is introduced into the heat exchanger 10 through a feed pipe 11 and is discharged through an outlet pipe 12. The plasma torch 1 also comprises a pipe 13 for introducing carrier gas into a distributing chamber 14 from which it flows into the space between the electrodes 2 and 3.

The plasma torch 1 is connected to the side wall of a cupola furnace 16 through a connecting pipe 15. The end of connecting pipe 15 is inserted in a hole in the wall of the shaft furnace. In use, the plasma jet 17, generated by the plasma torch 1, extends towards the centre of the cupola furnace and defines a cavity (dotted line 18) that is substantially void of solid material within the hot zone. Plasma jet 17 provides plasma heating to the hot zone.

The cupola furnace also comprises a waste inlet 19 located in the side wall of the furnace hot zone, and in this case above the orifice through which the plasma jet enters the cupola furnace. In use, waste mineral material may be delivered through waste inlet 19 to the cavity 18 defined by the plasma jet. This may be achieved, for instance, via an auger conveyor 20 which is mounted rotatably in a feed pipe 21 extending through the waste inlet 19, as shown in figure 1.

Plasma jet 17 melts waste mineral material and mineral material in the hot zone of the furnace, and the resulting mineral melt pools at the base of the cupola furnace. The mineral melt may be removed from the furnace in the usual way.

## Claims

1. A process for preparing a mineral melt in a cupola furnace, wherein the mineral melt is for the formation of mineral wool, the cupola furnace comprises
(i) a hot zone at the base of the furnace;
(ii) a melt outlet in the hot zone;
(iii) at least one plasma torch that provides plasma heating to the hot zone, by way of a plasma jet that defines a cavity that is substantially void of solid material within the hot zone; and
(iv) a waste inlet located in the side wall of the furnace hot zone, and is configured to deliver waste mineral material to the cavity defined by the plasma jet,
wherein mineral material and the waste mineral material supplied to the furnace is melted to form the mineral melt.

2. The process as claimed in claim 1, wherein the amount of waste mineral material used is from 1 to 40%, preferably 5 to 35%, more preferably 10 to 20%, of the total weight of waste mineral material and mineral material.

3. The process as claimed in claim 1 or claim 2, wherein the waste inlet
(I) is located in the wall of the furnace above the point at which the plasma jet enters the furnace; and/or
(II) has an area of from 3 cm² to 320 cm², preferably from 20 cm² to 180 cm², more preferably from 50 cm² to 115 cm².

4. The process as claimed in any preceding claim, wherein the waste mineral material is fed through the waste inlet by
(a) an auger conveyor; or
(b) a pneumatic tube transport, preferably wherein the pneumatic tube transport uses recycled off-gas from the cupola furnace or nitrogen gas (N₂) or any other non-oxygen containing gas,
preferably wherein the waste mineral material is fed through the waste inlet by an auger conveyor.

5. The process as claimed in any preceding claim, wherein the cupola furnace comprises two to five plasma torches, preferably three or four plasma torches, located substantially in the horizontal plane around perimeter of the furnace and substantially equidistant from each other, wherein the plasma jet from each plasma torch extends towards the centre of the cupola furnace, with each plasma torch having an associated waste inlet.

6. The process as claimed in any preceding claim, wherein the waste mineral material is milled, preferably by a rod mill, prior to being introduced into the cupola furnace through the waste inlet.

7. The process as claimed in claim 6, wherein the waste mineral material is milled to a density of from 500 kgm³ to 1500 kgm³, such as from 700 kgm³ to 1250 kgm³, for instance from 800 kgm³ to 1000 kgm³.

8. The process as claimed in any preceding claim, wherein
(i) the furnace is equipped with at least one tuyere and/or oxygen injection port providing a source of oxygen in the oxidation zone of the cupola furnace;
(ii) the at least one plasma torch uses as carrier gas nitrogen (N₂), carbon monoxide (CO), carbon dioxide (CO₂), or a mixture thereof, optionally wherein carrier gas enthalpy is from 2.0 to 6.0 kWh/Nm³, such as from 3.0 to 5.0 kWh/Nm³, and preferably wherein the carrier gas is nitrogen (N₂);
(iii) greater than 50% of the furnace heating energy is provided by the plasma torch;
(iv) the temperature in the oxidation zone is below 1,400 °C;
(v) the temperature in the hot zone is greater than the temperature in the oxidation zone; and/or
(vi) water is substantially excluded from any zone of the furnace where the temperature is above 750 °C.

9. The process as claimed in any preceding claim, wherein
(I) greater than 60%, preferably greater than 70%, more preferably greater than 80%, event more preferably greater than 90%, most preferably all, of the cupola furnace heating energy is provided by the at least one plasma torch; and/or
(II) wherein heating is provided in the hot zone solely by the at least one plasma torch.

10. The process as claimed in any preceding claim, wherein
(a) the temperature in the oxidation zone is from 600 °C to 1,400 °C, preferably from 600 °C to 1,300 °C, more preferably from 600 °C to 1,200 °C, even more preferably from 600 °C to 1,100 °C, especially from 600 °C to 1,000 °C, most preferably from 600 °C to 900 °C, particularly from 600 °C to below 850 °C; and/or
(b) the temperature in the hot zone is above 800 °C, preferably above 900 °C, more preferably above 1,000 °C, more preferably above 1,100 °C, more preferably above 1,200 °C, more preferably above 1,300 °C, more preferably above 1,400 °C.

11. The process as claimed in any preceding claim, wherein the mineral melt has the following composition expressed as oxides, by weight%
| | |
|---|---|
| SiO₂ | 35 - 50, preferably 38-48, more preferably 33-44 |
| Al₂O₃ | 12-30, preferably 15-28, more preferably 16-24 |
| TiO₂ | up to 2 |
| Fe₂O₃ | 2-12 |
| CaO | 5-30, preferably 8-20 |
| MgO | 0-15, preferably 1-12 |
| Na₂O | 0-15 |
| K₂O | 0-15 |
| P₂O₅ | 0-3 |
| MnO | 0-3 |
| B₂O₃ | 0-3. |

12. The process as claimed in any preceding claim, wherein the proportion of Fe(2+) in the mineral melt is greater than 80% based on total Fe, preferably at least 90%, more preferably at least 95% and most preferably at least 97% based on total Fe.

13. The process as claimed in any preceding claim, wherein the carrier gas comprises, or consists of, at least one component of off-gas produced by the furnace, preferably wherein the at least one component of the off-gas undergoes off-gas cleaning prior to its use as carrier gas, more preferably the off-gas cleaning is to remove particles and/or water.

14. A process for manufacturing man-made vitreous fibres (MMVF) comprising the steps of
(i) forming a mineral melt using a process as defined in any one of claims 1 to 13;
(ii) fiberising the mineral melt by means of an internal or external spinning process, preferably using a cascade spinner; and
(iii) collecting the formed fibres.

15. A cupola furnace for the preparation of a mineral melt according to a process as defined in any one of claims 1 to 13.

## Patentansprüche

1. Verfahren zum Herstellen einer Mineralschmelze in einem Kupolofen, wobei die Mineralschmelze zur Bildung von Mineralwolle dient, wobei der Kupolofen Folgendes umfasst
(i) eine Heißzone an der Basis des Ofens;
(ii) einen Schmelzeaustritt in der Heißzone;
(iii) mindestens einen Plasmabrenner, der der Heißzone mittels eines Plasmastrahls eine Plasmaerwärmung bereitstellt, wobei der Plasmastrahl einen Hohlraum definiert, der innerhalb der Heißzone im Wesentlichen frei von festem Material ist; und
(iv) einen Abfalleinlass, der sich in der Seitenwand der Heißzone des Ofens befindet und ausgebildet ist, mineralisches Abfallmaterial zu dem durch den Plasmastrahl definierten Hohlraum zu fördern,
wobei dem Ofen zugeführtes mineralisches Material und das mineralische Abfallmaterial geschmolzen werden, um die Mineralschmelze zu bilden.

2. Verfahren nach Anspruch 1, wobei die Menge des verwendeten mineralischen Abfallmaterials 1 bis 40 %, bevorzugt 5 bis 35 %, bevorzugter 10 bis 20 %, des Gesamtgewichts von mineralischem Abfallmaterial und mineralischem Material beträgt.

3. Verfahren nach Anspruch 1 oder Anspruch 2, wobei der Abfalleinlass
(I) sich in der Wand des Ofens oberhalb des Punkts befindet, an dem der Plasmastrahl in den Ofen eintritt; und/oder
(II) eine Fläche von 3 cm² bis 320 cm², bevorzugt von 20 cm² bis 180 cm², bevorzugter von 50 cm² bis 115 cm², aufweist.

4. Verfahren nach einem vorstehenden Anspruch, wobei das mineralische Abfallmaterial durch den Abfalleinlass zugeführt wird mittels
(a) eines Schneckenförderers; oder
(b) einer pneumatischen Rohrförderung, wobei die pneumatische Rohrförderung bevorzugt recyceltes Abgas aus dem Kupolofen oder Stickstoffgas (N₂) oder irgendein anderes, keinen Sauerstoff enthaltendes Gas verwendet, bevorzugt, wobei das mineralische Abfallmaterial durch den Abfalleinlass mittels eines Schneckenförderers zugeführt wird.

5. Verfahren nach einem vorstehenden Anspruch, wobei der Kupolofen zwei bis fünf Plasmabrenner, bevorzugt drei oder vier Plasmabrenner, umfasst, die im Wesentlichen in der horizontalen Ebene um den Umfang des Ofens herum angeordnet und im Wesentlichen äquidistant voneinander angeordnet sind, wobei sich der Plasmastrahl von jedem Plasmabrenner in Richtung des Zentrums des Kupolofens erstreckt, wobei jeder Plasmabrenner einen zugeordneten Abfalleinlass aufweist.

6. Verfahren nach einem vorstehenden Anspruch, wobei das mineralische Abfallmaterial vor dem Einbringen in den Kupolofen durch den Abfalleinlass gemahlen wird, bevorzugt durch eine Stabmühle.

7. Verfahren nach Anspruch 6, wobei das mineralische Abfallmaterial auf eine Dichte von 500 kg/m³ bis 1500 kg/m³ gemahlen wird, wie etwa von 700 kg/m³ bis 1250 kg/m³, beispielsweise von 800 kg/m³ bis 1000 kg/m³.

8. Verfahren nach einem vorstehenden Anspruch, wobei
(i) der Ofen mit mindestens einer Winddüse und/oder Sauerstoffeinspritzöffnung ausgestattet ist, die eine Sauerstoffquelle in der Oxidationszone des Kupolofens bereitstellt;
(ii) der mindestens eine Plasmabrenner als Trägergas Stickstoff (N₂), Kohlenmonoxid (CO), Kohlendioxid (CO₂) oder ein Gemisch davon verwendet, wahlweise wobei die Trägergasenthalpie 2,0 bis 6,0 kWh/Nm³ beträgt, wie etwa 3,0 bis 5,0 kWh/Nm³, und bevorzugt wobei das Trägergas Stickstoff (N₂) ist;
(iii) mehr als 50 % der Ofenheizenergie durch den Plasmabrenner bereitgestellt wird;
(iv) die Temperatur in der Oxidationszone unter 1.400 °C liegt;
(v) die Temperatur in der Heißzone höher ist als die Temperatur in der Oxidationszone; und/oder
(vi) Wasser aus jeder Zone des Ofens, in der die Temperatur über 750 °C liegt, im Wesentlichen ausgeschlossen wird.

9. Verfahren nach einem vorstehenden Anspruch, wobei
(I) mehr als 60 %, bevorzugt mehr als 70 %, bevorzugter mehr als 80 %, noch bevorzugter mehr als 90 %, besonders bevorzugt die gesamte Heizenergie des Kupolofens durch den mindestens einen Plasmabrenner bereitgestellt wird; und/oder
(II) wobei die Erwärmung in der Heißzone ausschließlich durch den mindestens einen Plasmabrenner bereitgestellt wird.

10. Verfahren nach einem vorstehenden Anspruch, wobei
(a) die Temperatur in der Oxidationszone 600 °C bis 1.400 °C, bevorzugt 600 °C bis 1.300 °C, bevorzugter 600 °C bis 1.200 °C, noch bevorzugter 600 °C bis 1.100 °C, insbesondere 600 °C bis 1.000 °C, besonders bevorzugt 600 °C bis 900 °C, insbesondere 600 °C bis unter 850 °C beträgt; und/oder
(b) die Temperatur in der Heißzone über 800 °C, bevorzugt über 900 °C, bevorzugter über 1.000 °C, bevorzugter über 1.100 °C, bevorzugter über 1.200 °C, bevorzugter über 1.300 °C, bevorzugter über 1.400 °C liegt.

11. Verfahren nach einem vorstehenden Anspruch, wobei die Mineralschmelze die folgende als Oxide ausgedrückte Zusammensetzung in Gew.-% aufweist
| | |
|---|---|
| SiO₂ | 35 - 50, bevorzugt 38 - 48, bevorzugter 33 - 44 |
| Al₂O₃ | 12-30, bevorzugt 15 - 28, bevorzugter 16 - 24 |
| TiO₂ | bis zu 2 |
| Fe₂O₃ | 2-12 |
| CaO | 5-30, bevorzugt 8-20 |
| MgO | 0-15, bevorzugt 1-12 |
| Na₂O | 0-15 |
| K₂O | 0-15 |
| P₂O₅ | 0-3 |
| MnO | 0-3 |
| B₂O₃ | 0-3. |

12. Verfahren nach einem vorstehenden Anspruch, wobei der Anteil von Fe(2+) in der Mineralschmelze größer als 80 %, bezogen auf Gesamt-Fe, bevorzugt mindestens 90 %, bevorzugter mindestens 95 % und besonders bevorzugt mindestens 97 %, bezogen auf Gesamt-Fe ist.

13. Verfahren nach einem vorstehenden Anspruch, wobei das Trägergas mindestens eine Komponente des von dem Ofen erzeugten Abgases umfasst oder daraus besteht, bevorzugt, wobei die mindestens eine Komponente des Abgases vor ihrer Verwendung als Trägergas einer Abgasreinigung unterzogen wird, bevorzugter die Abgasreinigung zum Entfernen von Partikeln und/oder Wasser dient.

14. Verfahren zum Herstellen von künstlichen glasigen Fasern (MMVF), umfassend die folgenden Schritte
(i) Bilden einer Mineralschmelze unter Verwendung eines Verfahrens nach einem der Ansprüche 1 bis 13;
(ii) Fasernbilden der Mineralschmelze mittels eines internen oder externen Schleuderverfahrens, bevorzugt unter Verwendung einer Kaskadenschleuder; und
(iii) Sammeln der gebildeten Fasern.

15. Kupolofen zum Herstellen einer Mineralschmelze nach einem Verfahren nach einem der Ansprüche 1 bis 13.

## Revendications

1. Procédé de préparation d'une masse fondue minérale dans un four à cubilot, la masse fondue minérale étant destinée à la formation de laine minérale, le four à cubilot comprenant
(i) une zone chaude à la base du four ;
(ii) un orifice de sortie de la masse fondue dans la zone chaude ;
(iii) au moins une torche à plasma qui fournit un chauffage par plasma à la zone chaude, au moyen d'un jet de plasma qui définit une cavité qui est sensiblement exempte de matériau solide à l'intérieur de la zone chaude ; et
(iv) un orifice d'introduction des déchets, situé dans la paroi latérale de la zone chaude du four et qui est configuré de manière à délivrer du déchet minéral à la cavité définie par le jet de plasma,
dans lequel un matériau minéral et le déchet minéral alimentés dans le four sont fondus pour former la masse fondue minérale.

2. Procédé selon la revendication 1, dans lequel la quantité de déchet minéral utilisée va de 1 à 40 %, de préférence de 5 à 35 %, de manière encore préférée, de 10 à 20 %, du poids total de déchet minéral et de matériau minéral.

3. Procédé selon la revendication 1 ou la revendication 2, dans lequel l'orifice d'introduction des déchets
(I) est situé dans la paroi du four au-dessus du point auquel le jet de plasma pénètre dans le four ; et/ou
(II) présente une aire de 3 cm² à 320 cm², de préférence de 20 cm² à 180 cm², de manière encore préférée, de 50 cm² à 115 cm².

4. Procédé selon une quelconque revendication précédente, dans lequel le déchet minéral est alimenté à travers l'orifice d'introduction des déchets par
(a) un convoyeur à vis ; ou
(b) un transport pneumatique en conduite, de préférence dans lequel le transport pneumatique en conduite utilise des gaz de fumée recyclés provenant du four à cubilot, ou du gaz azote (N₂), ou tout autre gaz ne contenant pas d'oxygène, de préférence dans lequel le déchet minéral est alimenté à travers l'orifice d'introduction des déchets par un convoyeur à vis.

5. Procédé selon une quelconque revendication précédente, dans lequel le four à cubilot comprend de deux à cinq torches à plasma, de préférence trois ou quatre torches à plasma, situées sensiblement dans le plan horizontal autour du périmètre du four et sensiblement équidistantes les unes des autres, dans lequel le jet de plasma de chaque torche à plasma s'étend vers le centre du four à cubilot, dans lequel chaque torche à plasma a un orifice d'introduction des déchets associé.

6. Procédé selon une quelconque revendication précédente, dans lequel le déchet minéral est broyé, de préférence au moyen d'un broyeur à barres, avant d'être introduit dans le four à cubilot à travers l'orifice d'introduction des déchets.

7. Procédé selon la revendication 6, dans lequel le déchet minéral est broyé à une masse volumique allant de 500 kgm³ à 1500 kgm³, en particulier de 700 kgm³ à 1250 kgm³, par exemple de 800 kgm³ à 1000 kgm³.

8. Procédé selon une quelconque revendication précédente, dans lequel
(i) le four est équipé d'au moins une tuyère et/ou d'un orifice d'injection d'oxygène fournissant une source d'oxygène dans la zone d'oxydation du four à cubilot ;
(ii) au moins une torche à plasma utilise comme gaz porteur de l'azote (N₂), du monoxyde de carbone (CO), du dioxyde de carbone (CO₂), ou un mélange de ceux-ci, facultativement dans lequel l'enthalpie du gaz porteur va de 2,0 à 6,0 kWh/Nm³, en particulier de 3,0 à 5,0 kWh/Nm³, et de préférence dans lequel le gaz porteur est de l'azote (N2) ;
(iii) plus de 50 % de l'énergie de chauffage du four est fournie par la torche à plasma ;
(iv) la température dans la zone d'oxydation est inférieure à 1400 °C ;
(v) la température dans la zone chaude est supérieure à la température dans la zone d'oxydation ; et/ou
(vi) l'eau est sensiblement exclue de toute zone du four dans laquelle la température est supérieure à 750 °C.

9. Procédé selon une quelconque revendication précédente, dans lequel
(I) plus de 60 %, de préférence plus de 70 %, de manière encore préférée, plus de 80 %, de manière plus préférée encore, plus de 90 %, de manière tout particulièrement préférée, la totalité, de l'énergie de chauffage du four à cubilot est fournie par au moins une torche à plasma ; et/ou
(II) dans lequel le chauffage est fourni dans la zone chaude uniquement par au moins une torche à plasma.

10. Procédé selon une quelconque revendication précédente, dans lequel
(a) la température dans la zone d'oxydation va de 600 °C à 1400 °C, de préférence de 600 °C à 1300 °C, de manière encore préférée, de 600 °C à 1200 °C, de manière plus préférée encore, de 600 °C à 1100 °C, en particulier de 600 °C à 1000 °C, de manière encore plus préférée, de 600 °C à 900 °C, particulièrement de 600 °C à moins de 850 °C ; et/ou
(b) la température dans la zone chaude est supérieure à 800 °C, de préférence supérieure à 900 °C, de manière encore préférée, supérieure à 1000 °C, de manière encore préférée, supérieure à 1100 °C, de manière encore préférée, supérieure à 1200 °C, de manière encore préférée, supérieure à 1300 °C, de manière encore préférée, supérieure à 1400 °C.

11. Procédé selon une quelconque revendication précédente, dans lequel la masse fondue minérale présente la composition suivante exprimée sous forme d'oxydes, en pourcentage en poids
| | |
|---|---|
| SiO₂ | de 35 à 50, de préférence de 38 à 48, de manière encore préférée, de 33 à 44 |
| Al₂O₃ | de 12 à 30, de préférence de 15 à 28, de manière encore préférée, de 16 à 24 |
| TiO₂ | jusqu'à 2 |
| Fe₂O₃ | de 2 à 12 |
| CaO | de 5 à 30, de préférence de 8 à 20 |
| MgO | de 0 à 15, de préférence de 1 à 12 |
| Na₂O | de 0 à 15 |
| K₂O | de 0 à 15 |
| P₂O₅ | de 0 à 3 |
| MnO | de 0 à 3 |
| B₂O₃ | de 0 à 3. |

12. Procédé selon une quelconque revendication précédente, dans lequel la proportion de Fe(2+) dans la masse fondue minérale est supérieure à 80 % par rapport au Fe total, de préférence à au moins 90 %, de manière encore préférée, à au moins 95 %, et de manière encore plus préférée, à au moins 97 % sur la base du Fe total.

13. Procédé selon une quelconque revendication précédente, dans lequel le gaz porteur comprend, ou consiste en, au moins un composant de gaz de fumée produit par le four, de préférence dans lequel ledit au moins un composant du gaz de fumée subit un nettoyage du gaz de fumée avant son utilisation comme gaz porteur, de manière encore préférée, le nettoyage du gaz de fumée étant destiné à éliminer des particules et/ou de l'eau.

14. Procédé de fabrication de fibres vitreuses artificielles (MMVF) comprenant les étapes consistant à
(i) former une masse fondue minérale en utilisant un procédé tel que défini dans l'une quelconque des revendications 1 à 13 ;
(ii) mettre en fibres la masse fondue minérale au moyen d'un procédé de filage interne ou externe, de préférence en utilisant un dispositif de fibrage en cascade ; et
(iii) collecter les fibres formées.

15. Four à cubilot pour la préparation d'une masse fondue minérale selon un procédé tel que défini dans l'une quelconque des revendications 1 à 13.
